# EUROPEAN PATENT SPECIFICATION

(11) **EP 3 423 530 B1**
(45) Date of publication and mention of the grant of the patent: **13.01.2021**
(21) Application number: 16892884.4
(22) Date of filing: 03.03.2016
(51) Int. Cl.: C09D 11/101, C09D 11/10, C09D 11/322, C09D 4/02, C08F 2/46

(54) **ELECTRON BEAM CURABLE INKJET INK COMPOSITION**
ELEKTRONENSTRAHLHÄRTBARE TINTENSTRAHLTINTENZUSAMMENSETZUNG
COMPOSITION D'ENCRE POUR JET D'ENCRE, DURCISSABLE PAR UN FAISCEAU ÉLECTRONIQUE

(43) Date of publication of application: 09.01.2019
(73) Proprietor: Inx International Ink Co., Schaumburg IL 60173 (US)
(72) Inventor: SUZUKI, Kenji, West Chicago, IL 60185 (US)
(74) Representative: Schütte, Gearoid
(86) International application number: PCT/US2016/020706
(87) International publication number: WO 2017/151137

(56) References cited:
- US-A1- 2003 199 655
- US-A1- 2007 281 245
- US-A1- 2008 038 570
- US-A1- 2008 045 618
- US-A1- 2013 323 426
- US-A1- 2014 220 315

## Description

### BACKGROUND OF THE INVENTION

### Field of the Invention

The present invention relates to an inkjet ink composition for packaging materials, in particular, an inkjet ink composition for food packaging.

### Description of the Related Art

The following are heretofore known: inkj et ink compositions each including a polymerization initiator and capable of being cured by irradiation with electron beam, as described in Japanese Patent Laid-Open Nos. 2013-208807, 2013-209518, 2013-209519 and 2013-227448; an electron beam curable inkjet ink including an oil gelling agent, excellent in strike through property and paper feed adaptability, as described in Japanese Patent Laid-Open No. 2005-126509; an inkjet recording ink including a photo polymerization initiator, having a specific surface tension, and being curable even by electron beam, as described in Japanese Patent Laid-Open No. 2006-219625; electron beam curable inkjet ink compositions in which, for example, a novel thioxanthone-based polymerization initiator containing a carbonyl group as introduced thereinto is mixed, or an organophosphorus compound is mixed to improve the adhesiveness to a substrate, as described in Japanese Patent Laid-Open Nos. 2005-54080 and 2009-221439; and an electron beam curable ink composition including a polyfunctional monomer or an oligomer, and a monofunctional monomer, and further a polymerization initiator, as described in International Publication No. WO 2015/148094.

Japanese Patent Laid-Open No. 2014-162828 describes an ultraviolet curable inkjet ink composition including a polyfunctional (meth)acrylate, a polymerization initiator and a vegetable oil, and U.S. Patent Application No. 20150124032 describes an ink which is used to print a polyolefin substrate or the like on the surface by ink jet printing and to be cured by irradiation with electron beam, wherein the ink includes a (meth)acrylated silicone surfactant, a polymerizable monomer, an oligomer, a prepolymer and a polymerization initiator.

Japanese Patent Laid-Open No. 2015-533861 describes an electron beam curable inkjet ink composition including an oligomer and a reactive diluent, but not including a photopolymerization initiator and an unreactive resin; however, although this composition can prevent the occurrence of migration, it is not clear whether or not this composition improves the adhesiveness to a substrate.

Japanese Patent Laid-Open No. 2007-112844 describes an electron beam curable inkjet ink composition including: at least one compound selected from the group consisting of (meth)acrylic acid, an ester of a monofunctional (meth)acrylic acid having a carboxyl group in the molecule thereof, and an ester of a monofunctional (meth)acrylic acid having a hydroxyl group in the molecule thereof; and a polymerizable compound having an amide structure in the molecule thereof; however, it is necessary that this composition include a polymerization initiator as an essential component.

U.S. Patent No. 7700263 discloses an inkjet ink composition having no solvent and no initiator each falling in a specific amount range determined by applying a specific formula, from the relative amounts of a monofunctional monomer, a bifunctional monomer and a tri- or higher functional monomer. However, this ultraviolet curable inkjet ink composition has insufficient adhesiveness.

An object of the present invention is to provide an electron beam curable inkjet ink composition allowing the printed layer to have sufficient adhesiveness to a substrate and to be suppressed in migration.

### SUMMARY OF THE INVENTION

The present inventors made a diligent study in order to achieve the above-described object, and consequently have perfected the present invention by discovering that a monofunctional polymerizable compound having a weight average molecular weight of 100 to 400 and having a hydroxyl group and a di- or higher functional polymerizable compound are allowed to be included in specific amounts, and preferably further an unreactive resin is allowed to be included, and thus, the above-described object can be achieved.

Specifically, the present invention relates to the following.
1. An electron beam curable inkjet ink composition including in 100 parts by mass thereof the following components a to c:
   a. 10 to 70 parts by mass of a monofunctional polymerizable compound having a weight average molecular weight of 100 to 400 and having a hydroxyl group;
   b. 10 to 75 parts by mass of a bifunctional polymerizable compound; and
   c. 0.1 to 10 parts by mass of an unreactive resin,
   wherein the electron beam curable inkjet ink composition does not include any of an organophosphorus compound, a polymerization initiator and a sensitizer, and has a viscosity of 30 mPa·s or less.
2. The electron beam curable inkjet ink composition according to 1, further including in 100 parts by mass thereof,
   d. less than 10 parts by mass of a polymerizable vinyl ether compound.
3. The electron beam curable inkjet ink composition according to 1, further including in 100 parts by mass thereof,
   e. a pigment and a pigment dispersant.
4. The electron beam curable inkjet ink composition according to 1, wherein the unreactive resin is at least one selected from a polyester resin, an acrylic resin, an epoxy resin and a ketone resin.

According to the present invention, the electron beam curable inkjet ink composition can be sufficiently cured by irradiation thereof with electron beam, and the electron beam curable inkjet ink composition includes neither a polymerization initiator nor a polymerization promoter, and accordingly even in a state in which the effective layer of the inkjet ink composition is brought into contact with food, the cured inkjet ink composition is not transferred to the food, or the substances included in the composition, of course inclusive of the polymerization initiator or the polymerization promoter, are not transferred to the food to be integrated with the food.

Accordingly, even if the polymerization initiator or the polymerization promoter may affect the human body or is prohibited to enter the human body through mouth, the present invention achieves an effect to remove worries about, for example, the adhesion of these substances to the food.

### DETAILED DESCRIPTION OF THE PREFERRED EMBODIMENTS

Hereinafter, the electron beam curable inkjet ink composition of the present invention is described.

### Monofunctional polymerizable compounds having a weight average molecular weight of 100 to 400 and having a hydroxyl group

As the monofunctional polymerizable compound having a weight average molecular weight of 100 to 400 and having a hydroxyl group of the present invention, at least one selected from the following can be used: hydroxymethyl (meth)acrylate, hydroxyethyl (meth)acrylate, hydroxypropyl (meth)acrylate, hydroxybutyl (meth)acrylate, ethylene glycol mono(meth)acrylate, polyethylene glycol mono(meth)acrylate, glycerin mono(meth)acrylate.

The monofunctional polymerizable compound having a hydroxyl group can be mixed with the electron beam curable inkjet ink composition of the present invention group in a content of 10.0 to 70.0% by mass, preferably 20.0 to 65.0% by mass. When the content of the monofunctional polymerizable compound having a hydroxyl group is less than 10.0% by mass in relation to the electron beam curable inkjet ink composition, unpreferably migration occurs to a large extent, smoke (smoke evolution during curing) occurs, or residual odor tends to remain after curing.

On the other hand, when the content of the monofunctional polymerizable compound having a hydroxyl group exceeds 70% by mass, unpreferably surface tack tends to grow.

### Bifunctional polymerizable compounds

The bifunctional polymerizable compound of the present invention is a compound having two double bonds in the molecule thereof, and examples of the compound having two double bonds in the molecule thereof include a bifunctional polymerizable vinyl ether and a compound having two acryloyl groups. Among these, a polymerizable vinyl ether or an alkoxylated aliphatic bifunctional acrylate is preferably adopted.

Examples of the polymerizable vinyl ether include: triethylene glycol divinyl ether, tetraethylene glycol divinyl ether, dipropylene glycol divinyl ether, tripropylene glycol divinyl ether, cyclohexane-1,4-dimethylol divinyl ether, 1,4-butanediol divinyl ether, 1,6-hexanediol divinyl ether, trimethylolpropane trivinyl ether, pentaerythritol tetravinyl ether, dipentaerythritol hexavinyl ether and dicyclopentadienedimethylol divinyl ether.

In addition, as the compound having two acryloyl groups such as an alkoxylated aliphatic bifunctional acrylate, the following compounds can be used: ethoxylated bisphenol A di(meth)acrylate, propoxylated bisphenol A di(meth)acrylate, propoxylated ethoxylated bisphenol A di(meth)acrylate, glycerin di(meth)acrylate, ethylene glycol di(meth)acrylate, diethylene glycol di(meth)acrylate, triethylene glycol di(meth)acrylate, tetraethylene glycol di(meth)acrylate, propylene glycol di(meth)acrylate, polypropylene di(meth)acrylate, ethoxylated polypropylene glycol di(meth)acrylate, ethoxylated propylene glycol di(meth)acrylate, tricyclodecane dimethanol diacrylate, 1,3-butanediol di(meth)acrylate, 1,4-butanedioldi(meth)acrylate, 1,9-nonanediol di(meth)acrylate, glycerin di(meth)acrylate, neopentylglycol di(meth)acrylate, poly olefin-modified neopentylglycol di(meth)acrylate, 1,6-hexanediol di(meth)acrylate, bisphenol A ethylene oxide-modified di(meth)acrylate, pentaerythritol di(meth)acrylate, trimethylolpropane di(meth)acrylate, glycerin di(meth)acrylate, trimethylolpropane propylene oxide-modified di(meth)acrylate, trimethylolpropane ethylene oxide-modified di(meth)acrylate and pentaerythritol.

In addition, it is possible to use the urethane (meth)acrylates obtained by adding a hydroxyl group-containing (meth)acrylate to the terminal of the urethane prepolymers obtained by allowing the foregoing components or the polyol compounds such as polyester polyol and poly ether polyol to react with the diisocyanates such as 2,4,4-trimethylhexamethylene diisocyanate, 2,2,4-trimethylhexamethylenediisocyanate, hexamethylene diisocyanate, isophorone diisocyanate, bis(4-isocyanatocyclohexyl)methane, bis(4-isocyanatophenyl)methane, 1,2-hydrogenated xylylene diisocyanate, 1,4-hydrogenated xylylene diisocyanate, hydrogenated tetramethylxylene diisocyanate, norbornane diisocyanate, trilene diisocyanate and xylylene diisocyanate.

### Tri- or higher functional polymerizable compounds

The tri- or higher functional polymerizable compound of the present invention is a compound having at least three polymerizable double bonds in the molecule thereof, and specifically, for example, the following compounds can be adodpted: tri(meth)acrylate compounds such as glycerin tri(meth)acrylate, trimethylolpropane propylene oxide-modified tri(meth)acrylate, and trimethylolpropane ethylene oxide-modified tri(meth)acrylate; pentaerythritol tri(meth)acrylate; pentaerythritol tetra(meth)acrylate; dipentaerythritol (meth)acrylates; polypentaerythritol acrylates such as tripentaerythritol (meth)acrylates and tetrapentaerythritol (meth)acrylate; (meth)acrylates of erythritols such as ethoxylated isoyanuric acid triacrylate; ε-caprolactone-modified tris(acryloxyethyl) isocyanurate; trimethylolpropane tri(meth)acrylate; ditrimethylolpropane tetra(meth)acrylate; ethoxylated pentaerythritol tetra(meth)acrylate; and silicon-modified hexafunctional acrylate oligomer.

The total amount used of the bifunctional polymerizable compound and the trifunctional polymerizable compound in relation to the electron beam curable inkjet ink composition of the present invention is as follows: these compounds can be mixed in a total content of 10.0 to 75.0% by mass, and are preferably mixed in a total content of 20.0 to 50.0% by mass. When the total amount used of the bifunctional polymerizable compound and the trifunctional polymerizable compound is less than 10.0% by mass, surface tack tends to grow, and when the total amount used of the bifunctional polymerizable compound and the trifunctional polymerizable compound exceeds 75.0% by mass, the adhesiveness tends to be degraded.

In this case, it is preferable to mix a polymerizable vinyl ether, and the content thereof is preferably less than 10% by mass.

### Monofunctional polymerizable compounds

As the monofunctional polymerizable compound in the present invention, the following compounds can be used: 4-t-butylcyclohexyl acrylate (TMCHA), 4-t-butyl cyclohexyl methacrylate, 3,3,5-trimethylcyclohexyl acrylate, 4-cyclohexylcyclohexyl (meth)acrylate, 3-cyclohexylcyclohexyl (meth)acrylate, 3-t-butylcyclohexyl (meth)acrylate, 4-isopropylcyclohexyl (meth)acrylate, 4-n-propylcyclohexyl (meth)acrylate, 3-ethylcyclohexyl (meth)acrylate, 2-methylcyclohexyl (meth)acrylate, 3,3,5-trimethylcyclohexyl (meth)acrylate, isobornylcyclohexyl (meth)acrylate, 4-t-butylcyclohexylethyl (meth)acrylate, 4-cyclohexylcyclohexylethyl (meth)acrylate, 3-cyclohexyl cyclohexyl ethyl (meth)acrylate, 2-methylcyclohexyl ethyl (meth)acrylate, and 3,3,5-trimethyl cyclohexyl ethyl (meth)acrylate.

### Unreactive resins

In the electron beam curable inkjet ink composition of the present invention, in order to improve the adhesiveness, an unreactive resin having no double bond and exhibiting reactivity when irradiated with electron beam is used in a content of 0.1 to 10% by mass in 100 parts by mass of the electron beam curable inkjet ink composition.

When the content of the unreactive resin used in 100 parts by mass of the electron beam curable inkjet ink composition is less than 0.1% by mass, the adhesiveness tends to be insufficient; on the other hand, when the content of the unreactive resin used exceeds 10% by mass, unpreferably disadvantages such as viscosity increase and ruled line crack tend to occur.

Specific examples of the unreactive resin may include: ketone resin, polyvinyl chloride, poly(meth)acrylic acid ester, epoxy resin, polyurethane resin, cellulose derivatives (such as ethyl cellulose, cellulose acetate and nitrocellulose), vinyl chloride-vinyl acetate copolymer, polyamide resin, polyvinyl acetal resin, diaryl phthalate resin, butadiene-acrylonitrile copolymer, acrylic resin, styrene-acrylic resin, styrene-maleic acid-based resin, rosin-based resin, rosin ester-based resin, ethylene-vinyl acetate-based resin, petroleum resin, coumarone-indene-based resin, terpene-phenol-based resin, phenolic resin, urethane resin, melamine resin, urea resin, epoxy resin, cellulose resins, vinyl chloride-acetate-based resin, xylene resin, alkyd resin, aliphatic hydrocarbon resin, butyral resin, silicon resin, maleic acid resin and fumaric acid resin; among these, polyester resin, acrylic resin, epoxy resin and ketone resin are preferable.

### Organophosphorus compounds, polymerization initiators and sensitizers

In the present invention, any of an organophosphorus compound, a polymerization initiator and a sensitizer is not substantially used. In particular, in the case where the polymerization initiator or the sensitizer remains on the printed surface, when a large amount of the polymerization promoter or the sensitizer is taken into the human body, there is a possibility that adverse effects are exerted on the human body. Accordingly, it is preferable for these compounds not to be included. In particular, when the ink composition is used for food packaging, these compounds are required not to be used.

In the present invention, a specific composition is adopted, and consequently, without using these compounds, it is possible to obtain a composition excellent as an electron beam curable inkjet ink composition.

### Pigments

In the present invention, as a pigment to be mixed with the electron beam curable inkjet ink composition, heretofore known coloring pigments can be adopted.

As such a coloring pigment, one or more optional pigments such as carbon black, titanium oxide and iron oxide can be added.

### Pigment dispersants

In the electron beam curable inkjet ink composition of the present invention, when a pigment is used as a colorant, it is preferable to include a pigment dispersant in order to improve the dispersibility of the pigment and to improve the storage stability of the ink composition.

As the pigment dispersant, any heretofore known pigment dispersants having hitherto been used in the field of ink composition can be used without being particularly limited; however, among these, polymer dispersants are preferable.

Examples of the polymer dispersant include: a carbodiimide-based dispersant, a polyester amine-based dispersant, a fatty acid amine-based dispersant, a modified polyacrylate-based dispersant, a modified polyurethane-based dispersant, a poly-chain polymeric nonionic dispersant, and a polymeric ionic surfactant. These pigment dispersants can be used each alone or as mixtures of two or more thereof.

The content of the pigment dispersant is usually preferably 1 to 200 parts by mass and more preferably 1 to 60 parts by mass in relation to 100 parts by mass of the whole pigments in the electron beam curable inkjet ink composition. When the content of the pigment dispersant is less than 1 part by mass, there is an adverse possibility that the pigment dispersibility and the storage stability of the ink composition are degraded; on the other hand, although the pigment dispersant can be included in a content exceeding 200 parts by mass, the effect difference is sometimes not found.

### Organic solvents

An organic solvent can be mixed with the electron beam curable inkjet ink composition of the present invention; however, it is desirable perfectly not to allow any organic solvent to be included from the environmental viewpoint. Examples of the organic solvent include: an ester-based organic solvent, an ether-based organic solvent, an ether-ester-based organic solvent, a ketone-based organic solvent, an aromatic hydrocarbon-based organic solvent and a nitrogen-containing organic solvent. The type and the mixing amount of the organic solvent are required to be such that the electron beam curable inkjet ink composition maintains an appropriate viscosity and the solvent can nearly easily evaporate after printing.

Specific examples of the preferable solvent may include: ethanol, propanol, butanol, ethyl acetate, butyl acetate, hexane, chloroform, toluene, xylene and benzene; additionally, ether-based organic solvents such as ethylene glycol monomethyl ether, ethylene glycol monoethyl ether, ethylene glycol monoisopropyl ether, ethylene glycol monobutyl ether, diethylene glycol monomethyl ether, diethylene glycol monoethyl ether, propylene glycol monomethyl ether, propylene glycol monoethyl ether, propylene glycol monobutyl ether, diethylene glycol diethyl ether, diethylene glycol dimethyl ether and diethylene glycol methyl ethyl ether; ether-ester-based organic solvents such as ethylene glycol monomethyl ether acetate, ethylene glycol monoethyl ether acetate, ethylene glycol monobutyl ether acetate, propylene glycol monomethyl ether acetate and propylene glycol monoethyl ether acetate; ketone-based organic solvents such as methyl isobutyl ketone, cyclohexanone, 2-heptanone and δ-butyrolactone; ester-based organic solvents such as methyl 2-hydroxypropionate, ethyl 2-hydroxypropionate, ethyl 2-hydroxy-2-methylpropionate, 3-methyl-3-methoxybutyl propionate, methyl 3-methoxypropionate, ethyl 3-methoxypropionate, methyl 3-ethoxypropionate, ethyl 3-ethoxypropionate, ethyl ethoxyacetate, ethyl hydroxyacetate and n-amyl formate; and nitrogen-containing organic solvents such as N-methylpyrrolidone, N,N-dimethyl formamide and N,N-dimethyl acetamide. These can be used each alone or as mixtures of two or more thereof.

### Additives

In the electron beam curable inkjet ink composition of the present invention, if necessary, various additives such as another photopolymerizable compound, a thermal polymerization inhibitor, an ultraviolet absorber and an antioxidant can be appropriately used.

### Production of electron beam curable inkjet ink composition

The electron beam curable inkjet ink composition of the present invention, composed of the above-described constituent materials can be produced by, for example, the following production method.

The materials constituting the electron beam curable inkjet ink of the present invention are placed in a mixing vessel, and the materials are mixed and subjected to a dispersion treatment to produce the electron beam curable inkjet ink; or alternatively, a prepared mix including a pigment is produced, then a composition prepared by mixing the components other than the prepared mix, and the prepared mix and the prepared composition are subjected to a mixing-dispersion treatment.

### Printing method

The electron beam curable inkjet ink composition of the present invention can be printed by using a heretofore known printer. As the printing substrate in this case, it is possible to adopt an optional material such as a sheet of paper, a resin sheet, a metal plate or a wooden plate.

The printing conditions may be the conditions depending on the printer using an inkjet ink.

The electron beam curable inkjet ink composition of the present invention allows letters and patterns to be printed; however, the inkjet ink composition concerned allows an over print layer to be formed on an already formed printed latter layer or an already formed printed pattern layer.

### Examples

Hereinafter, the present invention is described in more detail with reference to Examples; however, the present invention is not limited only to these Examples. Unless otherwise specified, "%" means "% by mass," and "parts" means "parts by mass."

### Electron beam curable inkjet ink compositions

A mixture prepared by mixing a pigment (Pigment Black 7) and a pigment dispersant (Solsperse 24000GR, manufactured by Lubrizol Corp.) and a photopolymerizable compound so as to have the mixing composition (% by mass) shown in Table 1 was dispersed by using an Eiger mill (as media, zirconia beads of 0.5 mm in diameter were used), and thus a concentrated base ink was obtained. A photopolymerization initiator and a surfactant were mixed with the obtained concentrated base ink so as to have the mixing composition (% by mass) shown in Table 1, and thus an electron beam curable inkjet ink composition was obtained for each of Examples 1 to 5 and Comparative Examples 1 to 7.

### Viscosity

The viscosity of each of the electron beam curable inkjet ink compositions obtained in Examples 1 to 5 and Comparative Examples 1 to 7 was measured by using a viscometer (Brookfield DVE) under the conditions of a temperature of 25°C and a rotational speed of 50 rpm. The viscosity was evaluated on the basis of the following standards. The results thus obtained are shown in Table 1.
○: The case where the viscosity is less than 30 mPa·s.
×: The case where the viscosity is 30 mPa·s or more.

In particular, in Examples, the viscosity values fall within a range from 21 to 25 mPa·s.

### Performance evaluation of ink compositions

Each of the electron beam curable inkjet ink compositions obtained in Examples 1 to 5 and Comparative Examples 1 to 7 was applied to a milk carton (Customer supplied poly-coated 12 point daily carton board) with a #4 bar coater. Next, the applied composition was cured by using an EB irradiation apparatus (EB irradiation apparatus, manufactured by AEB, Inc.) at 30 kGy.

### Adhesiveness

The adhesiveness of each cured coating film (substrate = milk carton paper) was evaluated on the basis of the following standards in terms of the peeling degree of the ink with a cellophane tape.
○: The case where the coating film is not peeled off.
×: The case where the coating film is peeled off.

### Method for evaluating migration

On the printed surface of each printed matter obtained by solid printing on an area of 100 cm², 10 mL of a mixed solvent of water : ethanol = 5:95 was dropwise placed; and the whole of each printed matter was placed in a sealed glass vessel to prevent the evaporation of the mixed solvent, and allowed to stand at 40°C for 3 days. Subsequently, the total elution amount (overall migration limit: OML), contained in the water-ethanol mixed solvent, from the printed matter was calculated and evaluated. The measurement of the total elution amount was performed by measuring the mass of the residual component obtained by evaporating the water-ethanol mixed solvent after being allowed to stand for 3 days. The migration was evaluated on the basis of the following standards. The evaluation result of 10 ppb or less is free from any practical problem.
○: The case where the elution amount is less than 10 ppb.
×: The case where the elution amount exceeds 10 ppb.

### Ejection stability

In an atmosphere at a temperature of 25°C, an inkjet recording apparatus equipped with an inkjet nozzle for a piezoelectric head and each of the electron beam curable inkjet ink compositions obtained in Examples 1 to 5 and Comparative Examples 1 to 7 were placed for 24 hours, and thus, the temperature of the inkjet recording apparatus and the temperature of each ink composition were set to be 25°C. Subsequently, in an atmosphere at a temperature of 25°C, by using each ink composition, a continuous printing was performed on a milk carton (Customer supplied poly-coated 12 point daily carton board), and the printing was evaluated on the basis of the following standards.
○: The case where the printing is free from disturbance and the ink composition can be stably ejected.
×: The case where the printing suffers from disturbance or the ink composition cannot be stably ejected.

### Occurrence or nonoccurrence of residual odor or smoke

By smelling the odor possessed by the ink composition after curing, it was verified whether or not residual odor or smoke was generated.

**Table 1**

| | Comparative Examples | | | | | | | Examples | | | | |
|---|---|---|---|---|---|---|---|---|---|---|---|---|
| | 1 | 2 | 3 | 4 | 5 | 6 | 7 | 1 | 2 | 3 | 4 | 5 |
| Silicon-modified hexafunctional acrylate oligomer | 1.5 | 1.5 | 1.5 | 1.5 | 1.5 | 1.5 | 3.5 | 1.5 | 1.5 | 1.5 | 1.5 | 1.5 |
| Polyol trifunctional acrylate | 2 | 2 | 2 | 2 | 2 | 2 | 2 | 2 | 2 | 2 | 2 | 2 |
| Monofunctional/bifu nctional urethane acrylate mixture | 1 | 1 | 1 | 1 | 1 | 1 | 1 | 1 | 1 | 1 | 1 | 1 |
| EO-modified TMPTA | 5 | 5 | 5 | 5 | 5 | 5 | 5 | 5 | 5 | 5 | 5 | 5 |
| PO-modified NPGDA | 12 | 15 | 9.35 | 9.35 | 9.35 | 9.35 | 9.35 | 9.35 | 9.35 | 9.35 | 9.35 | 9.35 |
| Alkoxylated aliphatic bifunctional acrylate | 55.9 | 52.9 | 58.5 | 58.5 | 58.5 | 67.5 | 58.5 | 44.5 | 29.5 | 0 | 44 | 44.5 |
| Triethylene glycol divinyl ether | 9 | 9 | 9 | 9 | 9 | 0 | 9 | 9 | 9 | 9 | 9 | 0 |
| 4-Hydroxybutyl acrylate | 6.5 | 6.5 | | | | 6.5 | 6.5 | 20.5 | 35.5 | 65 | 22.5 | 29.5 |
| 2-Phenoxyethyl acrylate | | | 6.5 | | | | | | | | | |
| Isobornyl acrylate | | | | 6.5 | | | | | | | | |
| Cyclic trimethylolpropane formal acrylate | | | | | 6.5 | | | | | | | |
| Black pigment | 3 | 3 | 3 | 3 | 3 | 3 | 3 | 3 | 3 | 3 | 3 | 3 |
| RJA dispersant | 0.6 | 0.6 | 0.6 | 0.6 | 0.6 | 0.6 | 0.6 | 0.6 | 0.6 | 0.6 | 0.6 | 0.6 |
| Methylhydroquinone | 0.05 | 0.05 | 0.05 | 0.05 | 0.05 | 0.05 | 0.05 | 0.05 | 0.05 | 0.05 | 0.05 | 0.05 |
| SK resin | 2 | 2 | 2 | 2 | 2 | 2 | 0 | 2 | 2 | 2 | 0.5 | 2 |
| Slip improver | 1.5 | 1.5 | 1.5 | 1.5 | 1.5 | 1.5 | 1.5 | 1.5 | 1.5 | 1.5 | 1.5 | 1.5 |
| Total | 100 | 100 | 100 | 100 | 100 | 100 | 100 | 100 | 100 | 100 | 100 | 100 |
| Viscosity | ○ | ○ | ○ | ○ | ○ | × | × | ○ | ○ | ○ | ○ | ○ |
| Adhesiveness | ○ | ○ | ○ | ○ | ○ | ○ | × | ○ | ○ | ○ | ○ | ○ |
| Migration | × | × | ○ | ○ | × | - | ○ | ○ | ○ | ○ | ○ | ○ |
| Ejection stability | ○ | ○ | ○ | ○ | ○ | - | ○ | ○ | ○ | ○ | ○ | ○ |
| Occurrence or nonoccurrence of residual odor and smoke | ○ | ○ | × | × | ○ | ○ | ○ | ○ | ○ | ○ | ○ | ○ |

EO-modified TMPTA: Ethylene oxide-modified trimethylolpropane
PO-modified NPGDA: Propylene-modified neopentylglycol diacrylate
Black pigment: Pigment Black 7
RJA dispersant: Solsperse 24000GR, manufactured by Lubrizol Corp.
SK resin: Solid content: 40%, diluent: PONPGDA (SR9003, manufactured by Sartomer Company, Inc.)
Slip improver: SF8421EG (silicone-based surfactant, manufactured by Dow Corning Toray Silicone Co., Ltd.)

According to Comparative Examples 3 to 5 not including the monofunctional polymerizable compound having a weight average molecular weight of 100 to 400 and having a hydroxy group, as the component a in the present invention, residual odor was generated or smoke was generated during curing, or migration occurred during curing.

According to Comparative Examples 1,2 and 6, being examples in which the content of the bifunctional polymerizable compound and the trifunctional polymerizable compound, as the component b, exceeded 75 parts by mass, migration occurred, and in particular, according to Comparative Example 6, the viscosity was too high and accordingly the ejection stability was also degraded.

Moreover, according to Comparative Example 7 including no unreactive resin, as the component c, the adhesiveness was degraded.

On the contrary, according to Examples 1 to 5 in accordance with the present invention, the viscosity was appropriate, the adhesiveness and the ejection stability were excellent, and none of migration, residual odor and smoke was generated.

## Claims

1. An electron beam curable inkjet ink composition, comprising in 100 parts by mass thereof the following components a to c:
a. 10 to 70 parts by mass of a monofunctional polymerizable compound having a weight average molecular weight of 100 to 400 and having a hydroxyl group;
b. 10 to 75 parts by mass of a bifunctional polymerizable compound and a trifunctional polymerizable compound; and
c. 0.1 to 10 parts by mass of an unreactive resin,
wherein the electron beam curable inkjet ink composition does not comprise any of an organophosphorus compound, a polymerization initiator and a sensitizer, and has a viscosity of 30 mPa·s or less at a temperature of 25°C.

2. The electron beam curable inkjet ink composition according to claim 1, further comprising in 100 parts by mass thereof:
d. less than 10 parts by mass of a polymerizable vinyl ether compound.

3. The electron beam curable inkjet ink composition according to claim 1, further comprising in 100 parts by mass thereof:
e. a pigment and a pigment dispersant.

4. The electron beam curable inkjet ink composition according to claim 1, wherein the unreactive resin is at least one selected from a polyester resin, an acrylic resin, an epoxy resin and a ketone resin.

## Patentansprüche

1. Elektronenstrahl-härtbare Tintenstrahldrucktintenzusammensetzung, die in 100 Massenteilen davon die folgenden Komponenten a bis c umfasst:
a. 10 bis 70 Massenteile einer monofunktionellen polymerisierbaren Verbindung, die ein gewichtsmittleres Molekulargewicht von 100 bis 400 aufweist und eine Hydroxylgruppe aufweist;
b. 10 bis 75 Massenteile einer bifunktionellen polymerisierbaren Verbindung und einer trifunktionellen polymerisierbaren Verbindung; und
c. 0,1 bis 10 Massenteile eines unreaktiven Harzes,
wobei die Elektronenstrahl-härtbare Tintenstrahldrucktintenzusammensetzung keines von einer phosphororganischen Verbindung, einem Polymerisationsinitiator und einem Sensibilisator umfasst und eine Viskosität von 30 mPa·s oder weniger bei einer Temperatur von 25 °C aufweist.

2. Elektronenstrahl-härtbare Tintenstrahldrucktintenzusammensetzung nach Anspruch 1, die weiter in 100 Massenteilen davon Folgendes umfasst:
d. weniger als 10 Massenteile einer polymerisierbaren Vinyletherverbindung.

3. Elektronenstrahl-härtbare Tintenstrahldrucktintenzusammensetzung nach Anspruch 1, die weiter in 100 Massenteilen davon Folgendes umfasst:
e. ein Pigment und ein Pigmentdispergiermittel.

4. Elektronenstrahl-härtbare Tintenstrahldrucktintenzusammensetzung nach Anspruch 1, wobei das unreaktive Harz zumindest eines aus einem Polyesterharz, einem Acrylharz, einem Epoxidharz und einem Ketonharz ausgewähltes ist.

## Revendications

1. Composition d'encre pour jet d'encre durcissable par faisceau d'électrons, comprenant, dans 100 parties en masse de celle-ci, les composants « a » à « c » suivants :
a. de 10 à 70 parties en masse d'un composé polymérisable monofonctionnel ayant un poids moléculaire moyen en poids allant de 100 à 400 et ayant un groupement hydroxyle ;
b. de 10 à 75 parties en masse d'un composé polymérisable bifonctionnel et d'un composé polymérisable trifonctionnel ; et
c. de 0,1 à 10 parties en masse d'une résine non réactive ;
la composition d'encre pour jet d'encre durcissable par faisceau d'électrons ne comprenant aucun quelconque parmi un composé organophosphoré, un initiateur de polymérisation et un sensibilisateur, et présentant une viscosité de 30 mPa.s ou moins à une température de 25°C.

2. Composition d'encre pour jet d'encre durcissable par faisceau d'électrons selon la revendication 1, comprenant en outre, dans 100 parties en masse de celle-ci :
d. moins de 10 parties en masse d'un composé de vinyléther polymérisable.

3. Composition d'encre pour jet d'encre durcissable par faisceau d'électrons selon la revendication 1, comprenant en outre, dans 100 parties en masse de celle-ci :
e. un pigment et un dispersant pour pigment.

4. Composition d'encre pour jet d'encre durcissable par faisceau d'électrons selon la revendication 1, dans laquelle la résine non réactive est au moins une résine choisie parmi une résine polyester, une résine acrylique, une résine époxy et une résine cétonique.
